# FASCICULE DE BREVET EUROPEEN

(11) **EP 1 334 865 B1**
(45) Date de publication et mention de la délivrance du brevet: **20.09.2006**
(21) Numéro de dépôt: 03356005.3
(22) Date de dépôt: 21.01.2003
(51) Int. Cl.: B60N 2/015, B60N 2/08

(54) **Dispositif de calage vertical et automatique d'un siège de véhicule**
Automatisch Vertikalverkeilungseinrichtung eines Fahrzeugsitzes
Veritcal and automatic alignment device for a vehicle seat

(30) Priorité: 08.02.2002 FR 0201797
(43) Date de publication de la demande: 13.08.2003
(73) Titulaire: GRUPO ANTOLIN-INGENIERIA, S.A., 09080 Burgos (ES)
(72) Inventeur: Chabanne, Jean-Pierre, 89710 Champvallon (FR); Duchateau, Jean, 43330 Pont Salomon (FR)
(74) Mandataire: Maureau, Philippe

(56) Documents cités:
- EP-A- 0 565 973
- EP-A- 0 947 380
- EP-A- 0 949 111
- EP-A- 1 176 047
- US-A- 5 655 816
- US-A- 5 823 727

## Description

L'invention est relative à un dispositif de calage vertical et automatique dans des glissières en C d'un siège amovible de véhicule. Elle concerne plus spécialement les sièges amovibles comportant, d'une part, des moyens de positionnement dans des glissières longitudinales fixées au plancher du véhicule, d'autre part, des crochets de retenue, aptes à coopérer avec les retours internes de la glissière lorsque le siège est soumis à une énergie de choc et, de plus, des moyens permettant de régler leur position longitudinale, avec verrouillage dans la position choisie.

Dans ces sièges, la structure d'assise est solidaire d'un piètement formé par deux sous ensembles, respectivement droite et gauche, comprenant chacun un flasque rigide dont la partie inférieure est aménagée en forme de coulisseau pour circuler dans une glissière en C, et portés, par ce coulisseau :
- des verrous, coopérant avec retours, crans ou encoches de la glissière,
- des crochets de retenue,
- et un actionneur relié à des moyens de commande portés par le siège et à des moyens de rappel, pour commander les mouvements des verrous et des crochets.

On connaît par le document EP 1 176 047 un dispositif de guidage et d'ancrage pour siège amovible par rapport à deux glissières longitudinales parallèles fixées au plancher d'un véhicule.

Malgré le soin apporté à la fabrication des composants du piètement, à l'assemblage de ces composants et à la pose des glissières, le cumul des tolérances de fabrication peut, dans certaines combinaisons sièges-glissières, former des jeux verticaux qui, même lorsque le siège est calé et verrouillé dans ses glissières, favorisent des déplacements verticaux de faible ampleur, mais générateurs de bruit et d'inconfort pour l'occupant.

La présente invention a pour objet de remédier à cela en fournissant un dispositif de calage vertical automatique du piètement d'un siège dans ses glissières.

Ce dispositif de calage comprend :
- un tourillon vertical monté rotatif dans un palier du piètement,
- un organe de calage en translation vertical, lié en rotation à l'extrémité inférieure du tourillon et présentant, en vue par-dessus, une forme générale rectangulaire dont la plus petite dimension est inférieure à la largeur de la rainure de la glissière en C et dont la plus grande dimension est supérieure à cette largeur, pour pouvoir, en position de calage, venir sous les retours internes de la glissière,
- un ressort rappelant constamment l'organe de calage dans sa position de calage,
- un moyen pour faire pivoter le tourillon à l'encontre de son ressort de rappel jusqu'à une position dans laquelle l'organe de calage peut être engagé dans la rainure de la glissière correspondante,
- et au moins une rampe hélicoïdale qui, liée en rotation au tourillon, coopère avec une portée complémentaire fixe pour déplacer verticalement l'organe de calage et l'amener au contact des retours de la glissière.

Ainsi, chacun des sous-ensembles droit ou gauche du siège est équipé d'un organe de calage qui est normalement en position de calage, mais qui, lors de l'introduction des coulisseaux équipant ce siège dans des glissières, est amené en position d'introduction dans ces glissières. Dès que le siège est positionné dans celle-ci et que l'opérateur cesse d'actionner les moyens de commande des tourillons, le ressort de rappel associé à chacun d'eux les ramènent en position de repos, position dans laquelle l'organe de calage est disposée transversalement à la rainure de chaque glissière. Durant cette rotation, la rampe hélicoïdale de chaque tourillon vient en appui avec une portée complémentaire et provoque le déplacement vertical du tourillon, ce qui a pour effet d'amener l'organe de calage au contact de la face inférieure des retours de la glissière dans laquelle il est disposé, en assurant ainsi la liaison positive du siège avec ses glissières.

Il en résulte que, quels que soient les jeux fonctionnels résultant de la dispersion des tolérances de fabrication, le piètement est lié aux glissières pour supprimer la génération de tous bruits et tous déplacements verticaux, mais aussi horizontaux en raison du jeu entre les verrous et les logements les recevant.

Avantageusement, les moyens de commande de la rotation du tourillon comprennent un doigt vertical, saillant vers le haut, depuis la tête de ce tourillon et une rampe inclinée, simple ou double, ménagée dans une coulisse commandant les mouvements d'escamotage des verrous et des crochets de chacun des coulisseaux.

Ainsi, en même temps que l'opérateur actionne les moyens disposés sur le siège, pour amener les verrous et les crochets en position de rétraction, par exemple avant d'engager les coulisseaux des piètements dans les rainures en C des glissières, il commande le pivotement du tourillon à l'encontre de ses moyens de rappel et permet, à l'organe de calage, de passer de sa position de calage à sa position d'escamotage favorisant son engagement dans la glissière.

Dans une forme d'exécution de l'invention, le tourillon comporte une tête sous laquelle est ménagée la rampe hélicoïdale, tandis que la portée complémentaire coopérant avec cette rampe est ménagée sur la face en bout d'une collerette formée à l'extrémité supérieure d'un palier vertical pour le tourillon, ce palier étant rapporté dans le piètement et calé en rotation par rapport à lui.

Dans une autre forme d'exécution, la rampe hélicoïdale est formée sur la face supérieure de chacune des extrémités de l'organe de calage et coopère avec la face interne rectiligne des retours en C de la glissière.

D'autres caractéristiques et avantages ressortiront de la description qui suit en référence au dessin schématique annexé représentant deux formes d'exécution du dispositif de calage.
Figure 1 est une vue en perspective de la partie inférieure d'une armature de siège,
Figure 2 est une vue partielle, en perspective, du piètement droit d'un siège, lorsque les capots de protection du coulisseau sont enlevés,
Figure 3 est une vue en coupe transversale d'une première forme d'exécution du dispositif de calage, lorsqu'il est en position de calage,
Figure 4 est une vue partielle, en perspective, des éléments essentiels du dispositif de calage de figure 3,
Figure 5 est une vue en coupe transversale d'une autre forme d'exécution du dispositif de calage, lorsqu'il est en position de calage,
Figure 6 est une vue partielle en perspective du dispositif de calage de figure 5 et de sa coulisse de commande.

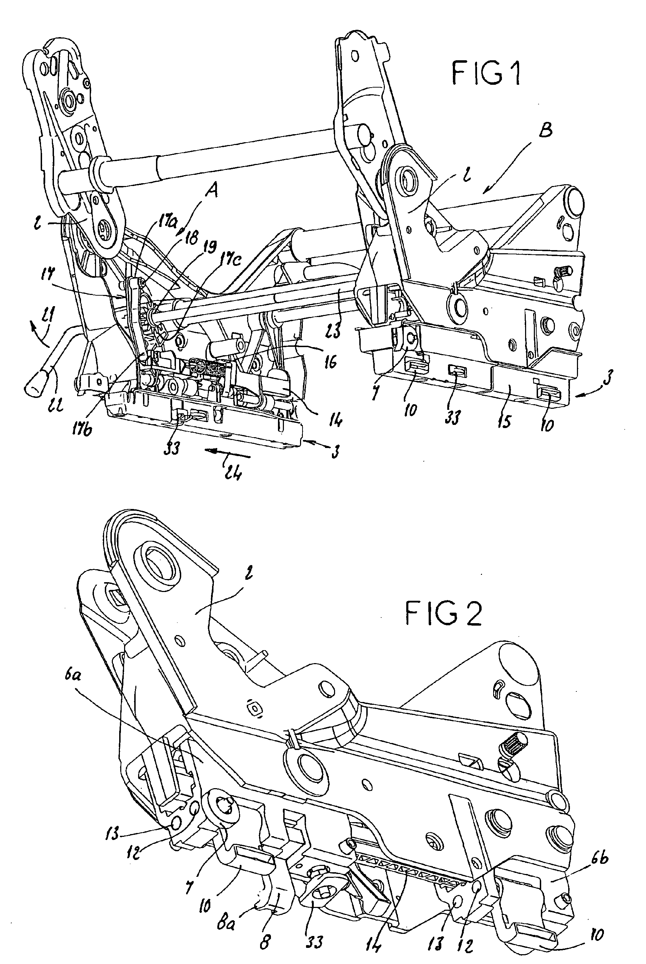

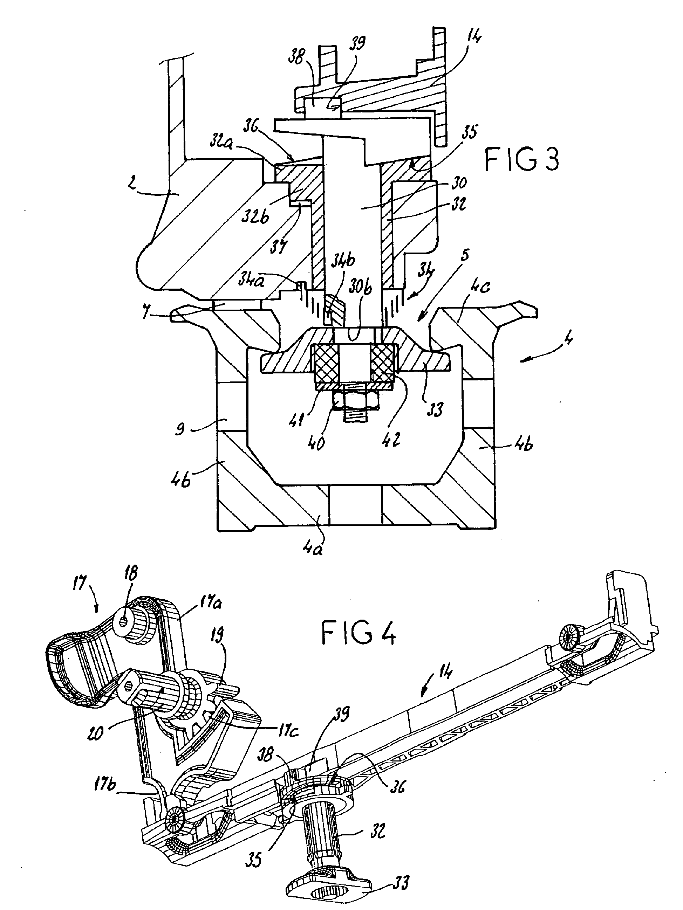

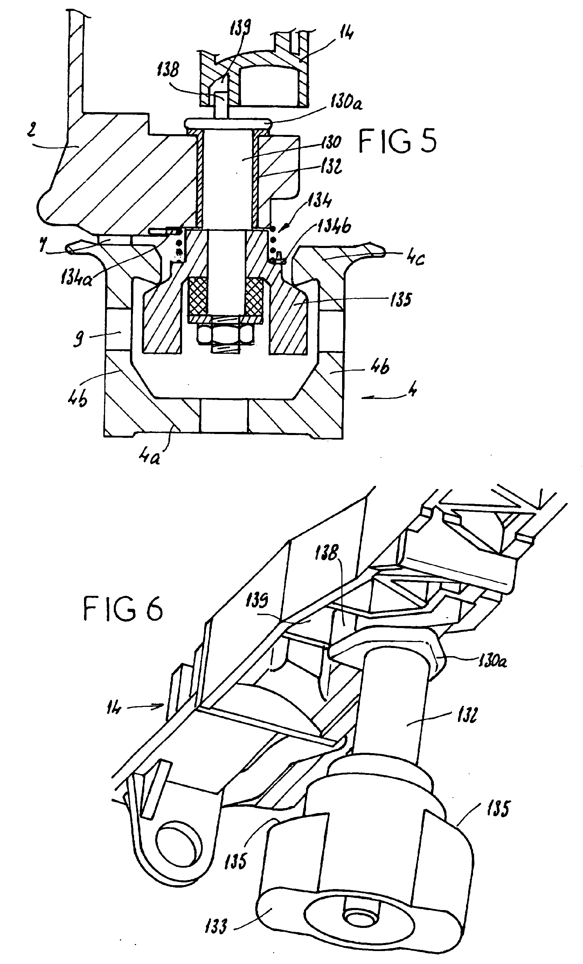

Comme montré à la figure 1, le dispositif selon l'invention s'applique à un siège dont la structure d'assise est composée de deux sous ensembles, respectivement, gauche A et droit B, formant piètement. Chacun de ces sous ensembles comprend un flasque rigide 2, réalisé en alliage métallique moulé, et dont la partie inférieure est en forme de coulisseau 3 pouvant circuler dans une glissière 4. Comme montré aux figures 3 et 5, la glissière 4 est en forme de C, c'est-à-dire est composée d'une âme 4a bordée par deux ailes 4b équipées, à leur extrémité libre supérieure, d'un retour interne 4c délimitant, avec le retour en vis-à-vis, une rainure 5.

Chaque sous ensemble du piètement comporte une structure interne portant directement, ou par l'intermédiaire de chariots 6a, 6b, comme montré à la figure 2 :
- des galets 7, aptes à rouler sur les retours 4c de la glissière,
- des verrous 8 dont les dents 8a sont aptes à coopérer avec des lumières 9 ménagées dans les ailes 4b de la glissière,
- et de crochets 10 aptes à venir au-dessous des retours internes 4c de la glissière pour retenir le piètement et le siège en cas de choc tendant à soulever le siège et son occupant.

Les verrous 8 et crochets 10 sont montés à articulation autour d'axes horizontaux et longitudinaux 12 et 13, sont chacun associés à des moyens de rappel les amenant en position d'utilisation, et sont chacun munis d'un doigt vertical, non représenté, coopérant avec des rampes inclinées ménagées dans un actionneur ou coulisse 14. Celle-ci est montée coulissante longitudinalement dans le piètement entre une position de repos, dans laquelle elle amène les crochets et les verrous en position de travail, et une position de commande, opposée à la première et dans laquelle elle provoque la rétraction des crochets 10 et des verrous 8 à l'intérieur d'un capot 15 s'insérant dans l'ouverture 5 de la glissière. Chaque coulisse 14 est maintenue en position de repos par un ressort de traction 16, visible à la figure 1, et est amenée en position de commande par un mécanisme comprenant, comme montré figures 1 et 4, d'une part, un levier 17, dont l'une des extrémités 17a est articulée en 18 sur le flasque 2 du piètement et dont l'autre extrémité 17b est en appui sur l'extrémité correspondante de la coulisse 14 et, d'autre part, un engrenage ou secteur denté 19 s'engrenant avec un secteur denté 17c du levier 17. Le secteur denté ou engrenage 19 est solidaire d'un arbre 20, qui est monté libre en rotation dans un palier du flasque 2 correspondant et qui dépasse à l'extérieur de ce flasque pour être lié en rotation à un levier de commande 22, visible figure 1. Dans la forme d'exécution représentée à la figure 1, l'engrenage 19 est lié par un arbre transversal 23 à l'engrenage 19 disposé dans l'autre sous ensemble.

On conçoit aisément que l'actionnement du levier 22 dans le sens de la flèche 21 provoque le pivotement dans le même sens du levier 17 et, en conséquence, le déplacement avec démultiplication de la coulisse 14 dans le sens de la flèche 24.

Dans une première phase du déplacement, les verrous 8 sont rétractés au-dessous du piètement pour libérer son verrouillage dans les glissières, tout en permettant le réglage de la position longitudinale du siège sur ses glissières.

Dans une deuxième phase, et si la course de la coulisse 14 est poursuivie, ce sont les crochets 10 qui s'escamotent et viennent dans l'encombrement du capot 14 pour permettre l'extraction du siège de ses glissières.

Lorsque le levier 22 est relâché, les ressorts de traction 16, disposés dans chacun des sous ensembles gauche A et droit B, ramènent le levier 22 et les coulisses 14 à leur position de départ. Ces divers moyens sont décrits plus en détails dans la demande de brevet européen n°01420158.6 au nom de la déposante. N'ayant en commun avec la présente invention que la coulisse 14, il ne paraît pas nécessaire de les décrire plus en détails.

L'invention porte donc sur un moyen de calage dans leur glissière des deux sous ensembles A et B d'un piètement de siège équipé de verrous 8 et de crochets de retenue 10.

Dans la forme d'exécution représentée aux figures 3 à 4, le dispositif de calage comprend :
- un tourillon 30 d'axe vertical, monté libre en rotation dans un palier 32 en matière plastique disposé dans un alésage vertical de la partie inférieure du flasque 2,
- un organe 33 de calage en translation vertical, calé en rotation à l'extrémité inférieure du tourillon 30,
- un ressort de rappel 34,
- et une rampe hélicoïdale 35.

Dans cette forme d'exécution, la rampe 35 est ménagée sous la tête 30a du tourillon 30 et coopère avec une rampe complémentaire 36, saillant de la face en bout d'une collerette 32a du palier 32. Ce palier est calé en rotation par une excroissance 32b qui se loge dans une encoche 37, ménagée en bordure de l'alésage pour le palier 32.

La tête 30a du tourillon 30 comporte, en saillie vers le haut, un doigt vertical 38 qui coopère avec une rampe 39, ménagée dans la coulisse 14.

Le ressort 34 est un ressort de torsion, et notamment un ressort en spirale dont l'une des extrémités 34a est liée au flasque 2 et dont l'autre extrémité 34b est liée au tourillon 30.

Comme montré plus en détails à la figure 4, l'organe de calage 33 a une forme générale rectangulaire et présente une largeur inférieure à la largeur de la rainure 5, formée entre les deux retours internes 4c de la glissière 4, et une longueur supérieure à cette largeur. La figure 3 montre qu'il est plaqué sur un épaulement 30b du tourillon 30 par un système écrou 40-rondelle 41 se vissant sur l'extrémité libre inférieure du tourillon et comprimant, contre lui, un manchon 42 en matériau viscoélastique. Cet organe 33 est lié en rotation au tourillon 30 par une clavette ou plus simplement par coopération de méplats, réalisés dans son alésage, avec des méplats complémentaires ménagés sur le tourillon 30.

Avec cet agencement, lors de l'opération d'engagement d'un piètement de siège dans ses glissières, l'actionnement du levier 22, provoquant, par l'intermédiaire, des coulisses 14 disposées dans chaque piètement, la rétraction ou escamotage à l'intérieur des capots 15, respectivement des verrous 8 et des crochets de retenue 10, entraîne également, par la rampe 39 de chaque coulisse coopérant avec le doigt 38 de chacun des tourillons, la rotation du tourillon sur 90°. Il en résulte que l'organe de calage 33 pivote et que sa plus grande dimension devient longitudinale. Dans ces conditions, les organes de calage s'insèrent dans l'encombrement des capots 15 et des coulisseaux qui s'engagent à l'intérieur de la glissière 4 correspondante.

Quand l'opérateur a positionné longitudinalement le piètement dans les glissières et relâche le levier 22, les ressorts de rappel 16 déplacent les coulisses 14 dans le sens inverse des flèches 24, ce qui permet aux verrous 8 de revenir en position de travail, en engageant leurs dents 8a dans les encoches 9 des ailes de la glissière, et aux crochets 10 de venir au-dessous, mais sans contact, des retours internes 4c des glissières. Simultanément, chacun des organes de calage 33 est ramené par son ressort 34 dans sa position de travail, dans laquelle il est disposé transversalement, comme représenté à la figure 3. Durant cette rotation, la rampe hélicoïdale 35 de la tête du tourillon vient en contact avec la rampe 36 qui lui fait vis-à-vis et provoque le déplacement vertical vers le haut de l'ensemble du tourillon, jusqu'à ce que l'organe de calage 33 vienne en contact avec la face inférieure des retours internes 4c de la glissière, comme montré à la figure 3.

Il en résulte que, même avec une combinaison défavorable de tolérance de fabrication, respectivement du siège et des glissières, tous les jeux verticaux sont annihilés, et qu'en conséquence, sont supprimées les sources de bruits et d'inconfort.

Il faut noter que, pour éviter que les mouvements de l'occupant sur le siège génère un effort d'extraction du piètement par rapport au glissière, pouvant provoquer la rupture des extrémités longitudinales de l'organe de calage 33, le manchon viscoélastique 42 peut se comprimer en donnant au tourillon 30 et au piètement correspondant, une légère course de dégagement vertical, réduisant les efforts sur l'organe 33.

Dans la forme d'exécution représentée à la figure 6, les éléments du dispositif de calage assurant les mêmes fonctions que dans la forme d'exécution précédente, portent les mêmes références mais majorées de 100. Ce dispositif porte un tourillon 130 avec une tête 130a équipée d'un tourillon 138 coopérant avec une rampe 139 de la coulisse 14. La rampe hélicoïdale 135 n'est pas ménagée sur la tête, mais sur chacune des extrémités de l'organe de calage calé à l'extrémité inférieure du tourillon. Le ressort 134 de rappel de l'organe 133 est un ressort hélicoïdal de torsion dont l'une des extrémités 134b est liée à l'organe 133, tandis que l'autre extrémité 134a est liée au flasque 2. Le tourillon est monté libre en rotation dans un palier 132, réalisé en matière plastique et emmanché dans un alésage vertical des flasques 2.

Exceptées ces différences constructives, le dispositif de calage fonctionne de la même manière, à savoir que, lors du relâchement de la poignée de commande disposée sur le siège, le ressort de rappel 134 fait pivoter de 90° l'organe de calage 133, afin que ses rampes 135 viennent en contact avec la face interne des retours 4c de la glissière 4 et immobilisent en translation verticale, la liaison du piètement avec ses glissières.

La figure 6 montre que, comme dans la forme d'exécution précédente, la largeur de l'organe 133 lui permet de pénétrer dans la glissière dans la phase de mise en place ou d'extraction du siège.

Dans les formes d'exécution qui ont été décrites ci-dessus, les moyens de mise en rotation du tourillon, à l'encontre de son ressort de rappel, sont constitués par un doigt coopérant avec une ou deux rampes, mais il est évident que ces moyens peuvent présenter toute autre forme tels que crémaillères, ou leviers, pourvu que le tourillon puisse tourner de 90° pour amener l'organe de calage en translation vertical de sa position normale de calage à sa position d'effacement permettant de passer dans la rainure 5 de la glissière 4.

## Revendications

1. Dispositif de calage vertical dans des glissières en C d'un siège amovible réglable dans lequel la structure d'assise est solidaire d'un piètement formé par deux sous ensembles, respectivement droit (B) et gauche (A), comprenant chacun un flasque rigide (2) dont la partie inférieure est conformée en coulisseau pouvant circuler dans une glissière en C (4), chaque sous ensemble comprenant des verrous (8), coopérant avec des retours, crans ou encoches (9) de la glissière, et des crochets (10) de retenue, aptes à coopérer avec les retours internes (4c) de la glissière lorsque le siège est soumis à une énergie de choc, **caractérisé en ce qu'**il comprend, dans chaque sous ensemble :
- un tourillon vertical (30, 130) monté rotatif dans un palier (32, 132) du piètement,
- un organe (33, 133) de calage en translation vertical, lié en rotation à l'extrémité inférieure du tourillon (30, 130) et présentant, en vue par-dessus, une forme générale rectangulaire dont la plus petite dimension est inférieure à la largeur de la rainure de la glissière en C et dont la plus grande dimension est supérieure à cette largeur, pour pouvoir, en position de calage, venir sous les retours internes de la glissière,
- un ressort (34, 134) rappelant constamment l'organe de calage dans sa position de calage,
- un moyen (38, 138) pour faire pivoter le tourillon à l'encontre de son ressort de rappel jusqu'à une position dans laquelle l'organe de calage (33, 133) peut être engagé dans la rainure (5) de la glissière (4) correspondante,
- et au moins une rampe hélicoïdale (35, 135) qui, liée en rotation au tourillon (30, 130) coopère avec une portée complémentaire fixe (36, 4c), pour déplacer verticalement l'organe de calage et l'amener au contact des retours de la glissière (4).

2. Dispositif de calage vertical d'un siège amovible selon la revendication 1, **caractérisé en ce que** les moyens de commande de la rotation du tourillon (30, 130) comprennent un doigt vertical (38, 138), saillant vers le haut, depuis la tête (30a, 130a) de ce tourillon et une rampe inclinée (39, 139), simple ou double, ménagée dans une coulisse (14) commandant les mouvements des verrous (8) et des crochets (10) de chacun des sous ensembles (A, B) d'escamotage.

3. Dispositif de calage vertical d'un siège amovible selon la revendication 1, **caractérisé en ce que** le tourillon (30) comporte une tête (30a) sous laquelle est ménagée la rampe hélicoïdale (35), tandis que la portée complémentaire (36) coopérant avec cette rampe (35) est ménagée sur la face en bout d'une collerette (32a) formée à l'extrémité supérieure d'un palier vertical (32) pour le tourillon, ce palier étant rapporté dans le piètement et calé en rotation par rapport à lui.

4. Dispositif de calage vertical d'un siège amovible selon la revendication 1, **caractérisé en ce que** la rampe hélicoïdale (135) est formée sur la face supérieure de chacune des extrémités de l'organe de calage (133) et coopère avec la face interne rectiligne des retours (4c) de la glissière (4).

5. Dispositif de calage vertical d'un siège amovible selon la revendication 1, **caractérisé en ce qu'**un manchon (42, 142) en matériau viscoélastique est interposé dans la liaison en translation verticale entre le tourillon (30, 130) et l'organe de calage (33, 133).

## Claims

1. Device for wedging vertically in C-shaped slideways, an adjustable removable seat in which the seat-part structure is secured to an underframe formed of two subassemblies, namely a right-hand one (B) and a left-hand one (A), each comprising a rigid sideplate (2) the lower part of which is shaped into a runner able to run in a C-shaped slideway (4), each subassembly comprising catches (8) collaborating with returns, teeth or notches (9) of the slideway, and retaining hooks (10) able to collaborate with the internal returns (4c) of the slideway when the seat is subjected to impact energy, **characterized in that** it comprises, in each subassembly:
- a vertical journal (30,130) mounted to rotate in a bearing (32,132) of the underframe,
- a member (33,133) for wedging in terms of vertical translation, connected in terms of rotation to the lower end of the journal (30,130) and having, when viewed from above, a rectangular overall shape the shortest dimension of which is less than the width of the groove of the C-shaped slideway and the longest dimension of which is greater than this width, so as to be able, in the wedged position, to sit under the internal returns of the slideway,
- a spring (34,134) constantly returning the wedging member to its wedging position,
- a means (38,138) for causing the journal to pivot against the action of its return spring into a position in which the wedging member (33,133) can be engaged in the groove (5) of the corresponding slideway (4),
- and at least one helical ramp (35,135) which, rotating as one with the journal (30,130), collaborates with a fixed complementary bearing surface (36,4c) to move the wedging member vertically and bring it into contact with the returns of the slideway (4).

2. Device for vertically wedging a removable seat according to Claim 1, **characterized in that** the means controlling the rotation of the journal (30,130) comprise a vertical finger (38,138) projecting upward from the head (30a,130a) of this journal and an inclined ramp (39,139), single or double, formed in a slide (14) controlling the movements of the catches (8) and of the hooks (10) of each of the subassemblies (A,B) for retraction.

3. Device for vertically wedging a removable seat according to Claim 1, **characterized in that** the journal (30) has a head (30a) under which the helical ramp (35) is formed while the complementary bearing surface (36) collaborating with this ramp (35) is formed on the end face of a flange (32a) formed at the upper end of a vertical bearing (32) for the journal, this bearing being attached in the underframe and prevented from rotating with respect to it.

4. Device for vertically wedging a removable seat according to Claim 1, **characterized in that** the helical ramp (135) is formed on the upper face of each of the ends of the wedging member (133) and collaborates with the straight internal face of the returns (4c) of the slideway (4).

5. Device for vertically wedging a removable seat according to Claim 1, **characterized in that** a sleeve (42,142) made of viscoelastic material is inserted in the link in terms of vertical translation between the journal (30,130) and the wedging member (33,133).

## Patentansprüche

1. Vorrichtung zum vertikalen Feststellen eines abnehmbaren verstellbaren Sitzes in C-förmigen Führungsschienen, bei der der Basisrahmen mit einer Fußanordnung fest verbunden ist, die durch zwei Untereinheiten, und zwar eine rechte (B) und eine linke (A) gebildet ist, die jeweils eine starre Wange (2) aufweisen, deren unterer Bereich als Schlitten ausgebildet ist, der in einer C-förmigen Führungsschiene (4) laufen kann, wobei jede Untereinheit Sperrklinken (8), die mit Unterschneidungen, Einkerbungen oder Rasten (9) der Führungsschiene zusammenwirken, und Rückhaltehaken (10) aufweist, die in der Lage sind, mit den inneren Unterschneidungen (4c) der Führungsschiene zusammenzuwirken, wenn der Sitz einer Aufprallenergie unterworfen ist, **dadurch gekennzeichnet, dass** sie in jeder Untereinheit aufweist:
- einen vertikalen Lagerzapfen (30, 130), der drehbar in einem Lager (32, 132) der Fußanordnung angebracht ist,
- ein Feststellorgan (33, 133) zum Feststellen bezüglich vertikaler Translation, das drehbar mit dem unteren Ende des Lagerzapfens (30, 130) verbunden ist und von oben gesehen eine allgemein rechteckige Form aufweist, deren kleinste Abmessung kleiner ist als die Breite der Nut der C-förmigen Führungsschiene, und dessen größte Abmessung größer ist als diese Breite, um in der Feststellposition unter die inneren Unterschneidungen der Führungsschiene kommen zu können,
- eine Feder (34, 134), die das Feststellorgan stets in seine Feststellposition zurückstellt,
- ein Mittel (38, 138), um den Lagerzapfen gegen seine Rückstellfeder bis zu einer Position drehen zu lassen, in der das Feststellorgan (33, 133) mit der Nut (5) der entsprechenden Führungsschiene (4) in Eingriff gebracht werden kann,
- und zumindest eine schraubenförmige Rampe (35, 135), die mit dem Lagerzapfen (30, 130) drehverbunden ist und mit einem feststehenden komplementären Zapfen (36, 4c) zusammenwirkt, um das Feststellorgan vertikal zu verlagern und es in Berührung mit den Unterschneidungen der Führungsschiene (4) zu bringen.

2. Vorrichtung zum vertikalen Feststellen eines abnehmbaren Sitzes nach Anspruch 1, **dadurch gekennzeichnet, dass** die Steuermittel für die Drehung des Lagerzapfens (30, 130) einen vertikalen Finger (38, 138) aufweisen, der von dem Kopf (30a, 130a) des Lagerzapfens nach oben vorspringt und eine einfache oder doppelte geneigte Rampe (39, 139), die in einer Kulisse (14) ausgebildet ist, die die Ausweichbewegungen der Sperrklinken (8) und der Haken (10) jeder der Untereinheiten (A, B) steuert.

3. Vorrichtung zum vertikalen Feststellen eines abnehmbaren Sitzes nach Anspruch 1, **dadurch gekennzeichnet, dass** der Lagerzapfen (30) einen Kopf (30a) aufweist, unter dem die schraubenförmige Rampe (35) ausgebildet ist, während der komplementäre Zapfen (36), der mit dieser Rampe (35) zusammenwirkt, auf der Stirnseite eines Ringflansches (32a) ausgebildet ist, der an dem oberen Ende eines vertikalen Lagers (32) für den Lagerzapfen gebildet ist, wobei dieses Lager in die Fußanordnung eingebracht und bezüglich dieser gegen Drehung festgestellt wird.

4. Vorrichtung zum vertikalen Feststellen eines abnehmbaren Sitzes nach Anspruch 1, **dadurch gekennzeichnet, dass** die schraubenförmige Rampe (135) auf der Oberseite jedes der Enden des Feststellorgans (133) gebildet ist und mit der geraden Innenseite der Unterschneidungen (4c) der Führungsschiene (4) zusammenwirkt.

5. Vorrichtung zum vertikalen Feststellen eines abnehmbaren Sitzes nach Anspruch 1, **dadurch gekennzeichnet, dass** eine Muffe (42, 142) aus viskoelastischem Material in der Verbindung bezüglich vertikaler Translation zwischen dem Lagerzapfen (30, 130) und dem Feststellorgan (33, 133) angeordnet ist.
